# EUROPÄISCHE PATENTANMELDUNG

(11) **EP 1 391 763 A1**
(43) Veröffentlichungstag der Anmeldung: **25.02.2004**
(21) Anmeldenummer: 02018064.2
(22) Anmeldetag: 13.08.2002
(51) Int. Cl.: G02B 6/42

(54) **Optoelektronisches Modul**

(71) Anmelder: Tyco Electronics AMP GmbH, 64625 Bensheim (DE)
(72) Erfinder: Lannoije, Marnix, 67346 Speyer (DE)
(74) Vertreter: Heinz-Schäfer, Marion

(57) **Zusammenfassung**

Es wird ein optoelektronisches Modul und ein Verfahren zum Herstellen eines optoelektronischen Moduls vorgeschlagen, das eine Anordnung mit mindestens einem optoelektronischen Bauelement aufweist, das auf einem Trägerelement mit wenigstens einer Leiterbahn aufgebracht und mit der Leiterbahn elektrisch verbunden ist, wobei die Anordnung von einem Gehäuse umgeben ist, das auf der Anordnung mit mindestens einem optoelektronischen Bauelement eine Abdeckung aufweist, welche über einem lichtemittierenden Bereich oder einem lichtempfindlichen Bereich des optoelektronischen Bauelementes der Anordnung einen lichtdurchlässigen Bereich aufweist, an den ein optischer Verbinder ankoppelbar ist, wobei der lichtdurchlässige Bereich in Form eines Fensters ausgebildet ist und dass der Raum zwischen dem lichtempfindlichen oder lichtemittierenden Bereich des Bauelementes und dem Fenster mit einem lichtdurchlässigen Gel ausgefüllt ist.

## Beschreibung

Die vorliegende Erfindung betrifft ein optoelektronisches Modul, das eine Anordnung mit mindestens einem optoelektronischen Bauelement aufweist, das auf einem Trägerelement mit wenigstens einer Leiterbahn aufgebracht und mit der Leiterbahn elektrisch verbunden ist, wobei die Anordnung von einem Gehäuse umgeben ist, das auf der Anordnung mit mindestens einem optoelektronischen Bauelement eine Abdeckung aufweist, welche über einem lichtemittierenden Bereich oder einem lichtempfindlichen Bereich des optoelektronischen Bauelementes der Anordnung einen lichtdurchlässigen Bereich aufweist, an den ein optischer Verbinder ankoppelbar ist.

Ein Standardverfahren zum Einkapseln mikroelektronischer Bauelemente ist das sogenannte Transfermolding. Dabei wird ein Trägerstreifen (leadframe) mit darauf gebondeten Bauelementen in ein Spritzwerkzeug eingelegt und mit einem Duroplast umspritzt. Um beispielsweise Dioden zu fertigen, kann hierfür ein durchsichtiges Duroplast verwendet werden.

Aus der DE 100 01 875 A1 ist ein optisches Sende-/ Empfangsmodul mit internem Lichtwellenleiter bekannt. Das Modul besteht im Wesentlichen aus einem Modulgehäuse in welches ein Leadframe eingeführt ist. Auf dem Leadframe ist ein elektrooptischer Wandler montiert. Das Innere des Modulgehäuses ist durch eine lichtdurchlässige Vergussmasse gefüllt. Ein Steckeraufnahmeteil ist an die äussere Gehäusewand des Modulgehäuses angeformt und weißt eine definierte Aussenkontur auf. Im Inneren des Steckeraufnahmeteils befindet sich ein Lichtwellenleiterstück, welches von der Umgebung einer Aussenfläche des Steckeraufnahmeteils ausgehend, durch das Innere des Steckeraufnahmeteils und eine Gehäuseöffnung, sich bis in das Gehäuseinnere erstreckt und mit dem elektrooptischen Wandler optisch gekoppelt ist. Die Montage und Justierung einer solchen Anordnung scheint relativ kompliziert.

Es ist eine Aufgabe der Erfindung, ein optoelektronisches Modul und ein Verfahren zum Herstellen eines optoelektronischen Moduls zur Verfügung zu stellen, das besonders einfach herzustellen ist.

Die Aufgabe wird erfindungsgemäß durch ein optoelektronisches Modul mit den Merkmalen des Anspruches 1 gelöst, sowie durch Verfahren mit den Merkmalen der Ansprüche 17 und 21. Vorteilhafte Weiterbildungen sind jeweils in den Unteransprüchen angegeben.

Ausführungsformen der Erfindung werden in den Figuren der Zeichnung dargestellt und nachstehend erläutert.

Es zeigen:
- Figur 1: eine erste Ausführungsform eines erfindungsgemäßen optoelektronischen Moduls in Aufsicht;
- Figur 2: eine Querschnittsansicht entlang der Linie A-A der Ausführungsform von Figur 1;
- Figur 3: eine Seitenansicht mit Teilquerschnitt entlang der Linie C-C der Ausführungsform von Figur 1;
- Figur 4: eine Aufsicht auf die Abdeckung gemäss der Ausführungsform von Figur 1;
- Figur 5: eine Querschnittsansicht entlang Linie A-A der Abdeckung von Figur 4;
- Figur 6: eine zweite Ausführungsform eines erfindungsgemäßen optoelektronischen Moduls in Aufsicht;
- Figur 7: ein erstes Herstellungsstadium der zweiten Ausführungsform des Moduls;
- Figur 8: ein zweites Herstellungsstadium der zweiten Ausführungsform des Moduls;
- Figur 9: ein drittes Herstellungsstadium der zweiten Ausführungsform des Moduls;
- Figur 10: ein viertes Herstellungsstadium der zweiten Ausführungsform des Moduls;
- Figur 11: eine perspektivische Ansicht des Moduls gemäss der zweiten Ausführungsform.

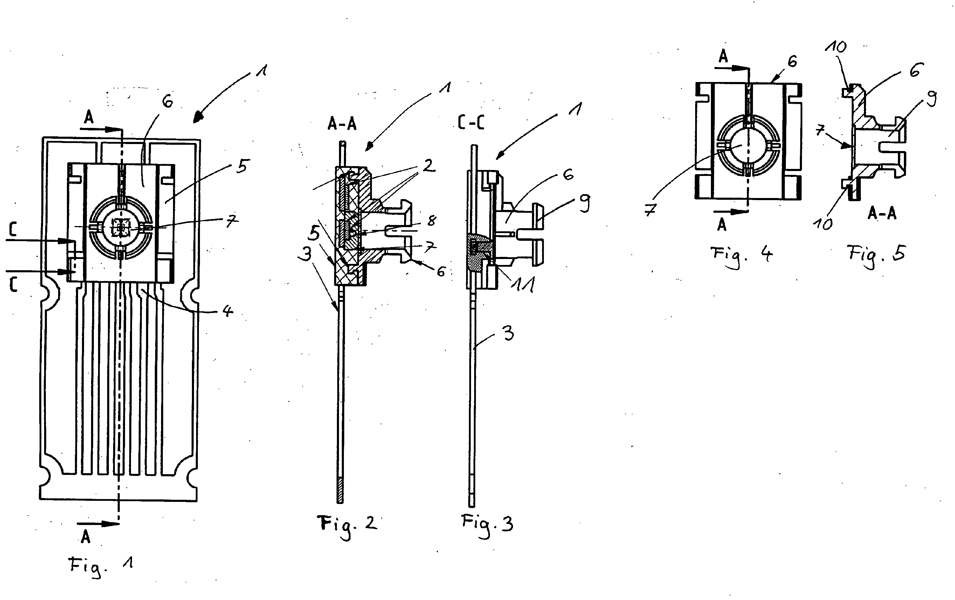

In Figur 1 ist ein erfindungsgemässes optoelektronisches Modul in einer Aufsicht dargestellt. In den Figuren 2 und 3 sind entsprechende Schnitte dieses Moduls 1 gezeigt. Das Modul 1 weist eine Anordnung 2 mit mindestens einem optoelektronischen Bauelement auf. Die Anordnung 2 kann einen Receiver und/oder Transmitter oder einen Transceiver aufweisen. Besonders vorteilhaft ist auch die Integration einer elektronischen Steuerschaltung oder eines Steuerchips.

Neben der Anordnung weist das Modul 1 ein Trägerelement 3 auf, mit wenigstens einer Leiterbahn 4. Das oder die Bauelemente sind auf das Trägerelement 3 aufgebracht und mit den Leiterbahnen 4 elektrisch verbunden.

Die Anordnung ist von einem Gehäuse 5 umgeben, das auf der Anordnung mit dem elektrooptischen Bauelement eine Abdeckung 6 aufweist, welche über einem lichtemittierenden Bereich oder lichtempfindlichen Bereich des optoelektronischen Bauelementes einen lichtdurchlässigen Bereich 7 aufweist, an den ein optischer Verbinder ankoppelbar ist. Der lichtdurchlässige Bereich 7 ist in Form eines Fensters ausgebildet und der Raum zwischen dem lichtempfindlichen oder lichtemittierenden Bereich des Bauelements und dem Fenster 7 ist mit einem lichtdurchlässigen Gel 8 ausgefüllt.

Als Trägerelement 3 wird ein gestanzter Trägerstreifen, auch Leadframe, eingesetzt. Es könnte aber auch ein Teil einer gedruckten Leiterplatte verwendet werden.

Die Abdeckung 6 ist als einteiliges separates Teil, ausgebildet mit einem lichtdurchlässigen Fenster 7 und einer Basis 8. Die Abdeckung 6 kann in einem Zweikomponenten-Spritzverfahren hergestellt werden. Die Abdeckung 6 weist an dem lichtdurchlässigen Bereich einen Ringschnapphacken 9 zum Aufnehmen eines optischen Verbinders auf.

Das Trägerelement 3 ist mit der Anordnung von Bauelementen 2, dem Gel 8 und der Abdeckung 6 thermoplastisch umspritzt, wodurch das Gehäuse 5 entsteht. Durch eine Hinterschnittkontur 10 an der Abdeckung 6 wird gewährleistet, dass diese beim Umspritzvorgang gut mit dem Gehäuse 5 in Verbindung steht. Dieser modifizierte Transfermolding-Prozess ermöglicht, dass an der Abdeckung eine beliebige Ankoppelstelle zur Kopplung mit einem optischen Verbinder vorgesehen ist. Wird diese Ankoppelstelle durch das Transfermoldverfahren selbst hergestellt so sind meist nur einfache Strukturen möglich. Der Transfermolding-Prozess selbst kann mit einem nicht durchsichtigen Duroplast durchgeführt werden, da nur eine partielle Durchsichtigkeit bei den elektrooptischen Elementen benötigt wird, die durch das Gel 8 und das Fenster 7 in der Abdeckung 6 gewährleistet werden.

Der Prozessablauf zur Herstellung des in den Figuren 1-3 dargestellten Moduls ist wie folgt: Zunächst wird ein Trägerelement 3 hergestellt, beispielsweise ein Leadframe gestanzt. Danach werden die aktiven Elemente durch Diebonden mit diesem verbunden, durch Wirebonden werden elektrische Verbindungen hergestellt. Danach wird das Gel 8 auf die elektrooptischen Bauelemente aufgebracht. Dann wird die Abdeckung 6 mit dem durchsichtigen Fenster 7 aufgesetzt. Statt dem Aufsetzen dieses Teils kann dieses auch in das obere Teil des Transfermold-Werkzeugs eingelegt werden. In einem Umgiess- oder Umspritzvorgang wird danach alles was sich unterhalb und ausserhalb des optischen Gels und der Abdeckung befindet mit einem Duroplast umgossen oder umspritzt.

Durch die Kombination einer Abdeckung mit einem durchsichtigen Fenster, eines Gels und eines Transfermoldingprozesses können viele Vorteile erreicht werden.

Auf Grund der separaten Abdeckung kann eine beliebige Struktur als Ankoppelstelle verwendet werden.

Die optische Schnittstelle kann sehr genau auf das Leadframe ausgerichtet werden, wenn man zum Beispiel Zapfen 11 bei der Abdeckung 6 vorsieht, die in Öffnungen in das Leadframe eingesetzt werden. Die gleichen Öffnungen können auch verwendet werden als Referenzpunkt zum Ausrichten der optoelektronischen Elemente. Durch diese doppelte Funktion bekommt man eine kürzere Toleranzkette und kann somit die Fehlerabweichungen verbessern.

Dadurch, dass beim Transfermoldverfahren ein Duoplast verwendet werden kann, das nicht notwendigerweise durchsichtig ist, ist man bei der Wahl des Duoplastes nicht mehr eingeschränkt. Man kann daher einen optimalen Kompromiss an Materialeigenschaften wählen, die angepasst sind auf kleine Ausdehnungskoeffizienten, grössere Diffusionsbarrieren und grosse mögliche Betriebstemparaturen. Dadurch werden die Ansatzmöglichkeiten des optoelektronischen Moduls vergrössert.

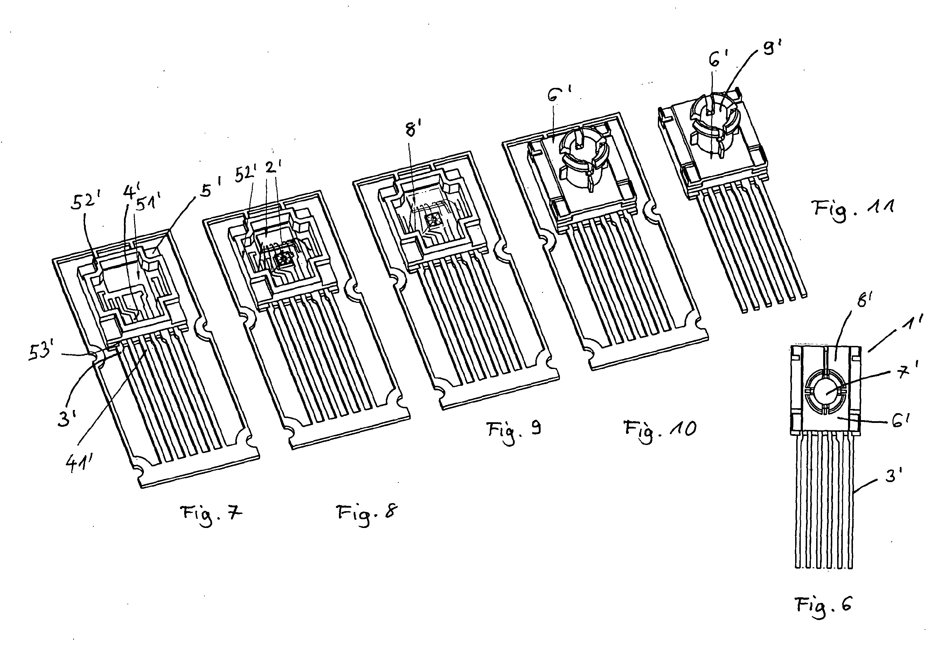

In den Figuren 4 und 5 ist die Abdeckung 6 des Moduls nochmals dargestellt. Die Abdeckung besteht aus dem lichtdurchlässigen Fenster 7, der Ringschnappverbindung 9 zur Verbindung mit einem optischen Verbinder, sowie der Basis 6. Während der Bereich 7 so ausgebildet ist, dass er möglichst durchlässig für das Licht der optoelektronischen Elemente ist, ist Bereich 6 derart ausgebildet, dass eine Verbindung beim Transfermolding mit dem Duroplast mit dem Transfermoldings möglichst gut gewährleistet wird. Die Abdeckung 6 ist besonders vorteilhaft in einem Zweikomponentenspritzverfahren herstellbar.

Anhand der Figuren 6 bis 11 soll nun ein zweites Ausführungsbeispiel des Moduls sowie der Herstellungsprozess dieser zweiten Variante des Moduls erläutert werden. Auch hier besteht das optoelektronische Modul 1' aus einer Anordnung 2' mit mindestens einem optoelektronischen Bauelement, beispielsweise mit einem Transceiver, wobei die Anordnung auf einem Trägerelement 3' aufgebracht ist. Das Trägerelement 3' ist beispielsweise ein Leadframe. Es weist wenigstens eine Leiterbahn 4' auf. Das optoelektronische Bauelement ist auf das Trägerelement 3' auf. Das optoelektronische Bauelement ist auf das Trägerelement 3' aufgebracht und mit der Leiterbahn elektrisch verbunden.

Die Anordnung ist von einem Gehäuse 5' umgeben, wobei das Gehäuse eine Abdeckung 6' aufweist, die über dem lichtemittierenden oder lichtempfindlichen Bereich des optischen Bauelements einen lichtdurchlässigen Bereich 7' in Form eines Fensters aufweist. Der Raum zwischen dem lichtempfindlichen oder lichtemittierenden Bereich des Bauelements und dem Fenster ist mit einem lichtdurchlässigen Gel 8' gefüllt.

Das Trägerelement 3' ist so thermoplastisch umspritzt, dass das Trägerelement so in das Gehäuse 5' eingebetet ist, dass die Oberfläche des Trägerelementes offen liegt. Das so gespritzte Gehäuse 5' weist einen Gehäuseboden 51' und einen Gehäuserahmen 52' mit mehreren Rahmenseiten auf. Die Rahmenseiten erstrecken sich im rechten Winkel zum Trägerelement. Die Rahmenseiten bilden einen etwa rechteckigen Gehäuseinnenraum aus. Zumindest eine Rahmenseite weist Durchführungen 53' für einen Leiterbahnanschluss 41' einer Leiterbahn 4' auf.

Die Anordnung weist nicht nur ein optoelektronisches Bauteil, sondern auch einen Steuerchip auf. Der Steuerchip und der Transceiver sind durch Diebonden auf dem Trägerelement 3' befestigt und werden mittels Wirebonden elektrisch verbunden. Danach wird der Gehäuse Innenraum mit einem durchsichtigen Gel vergossen. Dann wird auf dem Gehäuserahmen die Abdeckung 6' aufgesetzt.

Die Abdeckung 6' ist ein separates einteiliges Teil, das ein lichtdurchlässiges Fenster 7' und eine Basis 8' aufweist. Es ist besonders vorteilhaft die Abdeckung in einem Zweikomponenten-Spritzverfahren herzustellen. Dann kann für das Fenster ein lichtdurchlässiges Material gewählt werden, während für die Basis ein Material gewählt wird, das einerseits elastisch verformbar ist und andererseits verschweissbar. Die Möglichkeit der Verschweissung sollte gegeben werden, damit die Abdeckung 6' mit dem Gehäuserahmen 52' verschweisst werden kann. Da die Abdeckung 6' einen Ringschnapphaken 9' zum Aufnehmen eines optischen Verbinders aufweist, sollte das Material auch elastische Eigenschaften aufweisen.

Das Verfahren zum Herstellen des optoelektronischen Moduls 1' läuft im Wesentlichen wie folgt ab: Ein Trägerelement 3' wird in Form eines Leadframes durch stanzen hergestellt und dann durch thermoplastisches Umspritzen mit einem Gehäuse 5' versehen. Danach wird das mindestens eine elektronische Bauelement und beispielsweise eine elektronische Steuerschaltung auf das Trägerelement 3' aufgebracht, zum Beispiel durch Diebonden, und elektrisch verbunden, zum Beispiel durch Wirebonden. Zumindest das elektronische Bauelement wird mit einem durchsichtigen Gel 8' abgedeckt.

Es ist besonders vorteilhaft den gesamten Gehäuseinnenraum mit einem durchsichtigen Gel zu füllen. Dann wird die Abdeckung 6' auf das umspritzte Trägerelement so aufgebracht, dass der lichtdurchlässige Bereich 7' über eine optoelektronische Wirkfläche des optoelektronischen Baulementes zum Liegen kommt. Es ist von besonderem Vorteil die Abdeckung 6' mit dem Gehäuse 5' zu verschweissen.

## Patentansprüche

1. Optoelektronisches Modul (1, 1'), das eine Anordnung (2, 2') mit mindestens einem optoelektronischen Bauelement aufweist, das auf einem Trägerelement (3, 3') mit wenigstens einer Leiterbahn (4, 4') aufgebracht und mit der Leiterbahn elektrisch verbunden ist, wobei die Anordnung von einem Gehäuse (5, 5') umgeben ist, das auf der Anordnung mit mindestens einem optoelektronischen Bauelement eine Abdeckung (6, 6') aufweist, welche über einem lichtemittierenden Bereich oder einem lichtempfindlichen Bereich des optoelektronischen Bauelementes der Anordnung einen lichtdurchlässigen Bereich (7, 7') aufweist, an den ein optischer Verbinder ankoppelbar ist,
**dadurch gekennzeichnet,**
**dass** das der lichtdurchlässige Bereich in Form eines Fensters ausgebildet ist und dass der Raum zwischen dem lichtempfindlichen oder lichtemittierenden Bereich des Bauelementes und dem Fenster mit einem lichtdurchlässigen Gel (8, 8') ausgefüllt ist.

2. Optoelektronisches Modul nach Anspruch 1, **dadurch gekennzeichnet, dass** das Trägerelement (3, 3') ein gestanzter Trägerstreifen oder wenigstens ein Teil einer gedruckten Leiterplatte ist.

3. Optoelektronisches Modul nach wenigstens einem der vorhergehenden Ansprüche, **dadurch gekennzeichnet, dass** das Trägerelement (3') so thermoplastisch umspritzt ist, dass das Trägerelement so in das Gehäuse (5') eingebettet ist, dass die Oberfläche des Trägerelementes offen liegt.

4. Optoelektronisches Modul nach wenigstens einem der vorhergehenden Ansprüche, **dadurch gekennzeichnet, dass** das Gehäuse (5') einen Gehäuseboden (51') und einen Gehäuserahmen (52') mit mehreren, sich von dem Trägerelement (3') etwa im rechten Winkel erstreckenden Rahmenseiten aufweist.

5. Optoelektronisches Modul nach Anspruch 4, **dadurch gekennzeichnet, dass** die Rahmenseiten einen etwa rechteckigen Gehäuseinnenraum ausbilden.

6. Optoelektronisches Modul nach einem der Ansprüche 4 oder 5, **dadurch gekennzeichnet, dass** wenigstens eine Rahmenseite zumindest eine Durchführung (53') für einen Leiterbahnanschluss (41') der Leiterbahn (4') aufweist.

7. Optoelektronisches Modul nach wenigstens einem der Ansprüche 1 bis 6, **dadurch gekennzeichnet, dass** die Abdeckung (6, 6')ein separates Teil ist, das auf den Gehäuserahmen aufgebracht ist.

8. Optoelektronisches Modul nach wenigstens einem der Ansprüche 1 bis, **dadurch gekennzeichnet, dass** die Abdeckung (6, 6') ein einteiliges separates Teil ist, das ein lichtdurchlässiges Fenster (7, 7') und eine Basis (8, 8') aufweist.

9. Optoelektronisches Modul nach Anspruch 8, **dadurch gekennzeichnet, dass** die Abdeckung (6) in einem Zweikomponenten-Spritzverfahren hergestellt ist.

10. Optoelektronisches Modul nach wenigstens einem der vorhergehenden Ansprüche, **dadurch gekennzeichnet, dass** die Abdeckung (6') mit dem Gehäuserahmen (52') verschweisst ist.

11. Optoelektronisches Modul nach wenigstens einem der vorhergehenden Ansprüche, **dadurch gekennzeichnet, dass** die Anordnung (2) wenigstens einen Receiver und/oder einen Transmitter aufweist.

12. Optoelektronisches Modul nach Anspruch 11, **dadurch gekennzeichnet, dass** der Receiver und der Transmitter einen Transceiver ausbilden, indem der Transmitter und der Receiver übereinander angeordnet sind.

13. Optoelektronisches Modul nach wenigstens einem der vorhergehenden Ansprüche, **dadurch gekennzeichnet, dass** die Anordnung wenigstens einen elektronischen Steuerschaltkreis aufweist.

14. Optoelektronisches Modul nach wenigstens einem der vorhergehenden Ansprüche, **dadurch gekennzeichnet, dass** das Gel elastisch ist.

15. Optoelektronisches Modul nach wenigstens einem der vorhergehenden Ansprüche, **dadurch gekennzeichnet, dass** die Abdeckung (6, 6') an dem lichtdurchlässigen Bereich einen Ringschnapphaken (9, 9') zum Aufnehmen des optischen Verbinders aufweist.

16. Optoelektronisches Modul nach wenigstens einem der vorhergehenden Ansprüche, **dadurch gekennzeichnet, dass** das Trägerelement (3) mit der Anordnung (2), dem Gel (8) und der Abdeckung (6) zur Bildung des Gehäuses thermoplastisch umspritzt ist oder umgossen ist.

17. Verfahren zum Herstellen eines optoelektronischen Moduls (1') mit einer Anordnung (2') mit mindestens einem optoelektronischen Bauelement auf einem Trägerelement (3'), die eine Abdeckung (6') mit einem lichtdurchlässigen Bereich (7') über dem Bauelement aufweist, an den ein optischer Verbinder einkoppelbar ist, **dadurch gekennzeichnet, dass** das Verfahren folgende Schritte umfasst:
thermoplastisches Umspritzen des Trägerelementes (3'), um ein Gehäuse (5') auszubilden;
Aufbringen des wenigstens einen optoelektronischen Bauelementes auf das Trägerelement (3');
elektrisches Kontaktieren des wenigstens einen optoelektronisches Bauelementes mit Leiterbahnen (4') des Trägerelementes (3'),
Abdecken zumindest des optoelektronischen Bauelementes mit einem durchsichtigen Gel (8'),
Aufbringen der Abdeckung (6') auf das umspritzte Trägerelement (3'), so dass sich der lichtdurchlässige Bereich (7') über einer optoelektronischen Wirkfläche des optoelektronischen Bauelementes befindet.

18. Verfahren nach Anspruch 17, **dadurch gekennzeichnet, dass** die Abdeckung (6') mit dem Gehäuse (5') verschweisst wird.

19. Verfahren nach wenigstens einem der Ansprüche 17 oder 18, **dadurch gekennzeichnet, dass** das Aufbringen ein Aufkleben des optoelektronischen Bauelementes und/oder eines elektronischen Steuerschaltkreises auf das Trägerelement (3') umfasst.

20. Verfahren nach wenigstens einem der Ansprüche 17 bis 19, **dadurch gekennzeichnet, dass** das elektrische Kontaktieren ein Drahtbonden umfasst.

21. Verfahren zum Herstellen eines optoelektronischen Moduls (1) mit einer Anordnung mit mindestens einem optoelektronischen Bauelement auf einem Trägerelement (3), die eine Abdeckung (6) mit einem lichtdurchlässigen Fenster (7) über dem Bauelement aufweist, an das ein optischer Verbinder ankoppelbar ist,
wobei das Verfahren ein Aufbringen und elektrisches Kontaktieren wenigstens eines optoelektronischen Bauelementes auf dem Trägerelement (3) umfasst,
**dadurch gekennzeichnet, dass**
das Verfahren weiter umfasst:
Aufbringen eines Gels auf das elektrooptische Bauelement;
thermoplastisches Umspritzen oder Umgiessen des Trägerelementes mit Anordnung, Gel und Teilbereichen der Abdeckung.

22. Verfahren nach Anspruch 21, **dadurch gekennzeichnet, dass** der Umspritzvorgang mit einem undurchsichtigen Duroplast erfolgt.
